# EUROPÄISCHE PATENTANMELDUNG

(11) **EP 0 754 517 A1**
(43) Veröffentlichungstag der Anmeldung: **22.01.1997**
(21) Anmeldenummer: 96109121.2
(22) Anmeldetag: 07.06.1996
(51) Int. Cl.: B23K 9/127, B23K 26/00, B23K 26/02

(54) **Schweissverbindung für dünne Bleche**

(30) Priorität: 19.07.1995 DE 19526339
(71) Anmelder: Fried. Krupp AG Hoesch-Krupp, 45143 Essen (DE)
(72) Erfinder: Trösken, Friedhelm, Dr., 44797 Bochum (DE)

(57) **Zusammenfassung**

Um bei der Herstellung einer Schweißverbindung für automtisch geschweißte dünne Bleche (1,2,3) Meß- oder Steuerungenauigkeiten der Schweißmaschine auszugleichen, verläuft die Schweißnaht pendelnd um ihre theoretische oder mittels eines Sensors gemessene Lage an den Stoßlinien (4,5,6) der Bleche (1,2,3) und liegt abschnittsweise ein- oder beidseitig neben der Stoßlinie (4, 5, 6).

## Beschreibung

Die Erfindung betrifft eine Schweißverbindung für automatisch geschweißte dünne Bleche nach dem Oberbegriff des Patentanspruchs 1.

Die Technik des Schweißens hat sich in der letzten Zeit stark weiterentwickelt. Insbesondere durch Laserschweißen können äußerst dünne Bleche mit Wandstärken von unter 1 mm verschweißt werden.

Zum Verschweißen derartig dünner Bleche werden vorzugsweise Schweißautomaten oder Roboter eingesetzt. Die vorgegebene Schweißbahn wird entweder über eine Programmsteuerung vorgegeben oder die Lage der vorgesehenen Schweißnaht, d.h. die Lage der Stoßlinien der aneinanderstoßenden Kanten der zu verschweißenden Bleche wird mittels eines Sensors erfaßt, der diese Information an die Steuerung der Schweißmaschine weitergibt, wonach dann die Schweißbahn gesteuert wird. Insbesondere bei besonders dünnen Blechen ergibt sich die Problematik, daß die Toleranz der Steuerung oder die Meßgenauigkeit des Sensors gleich oder größer ist als die vorgesehene Schweißnahtbreite. Von daher besteht die Gefahr, daß die Schweißnaht direkt neben den zu verschweißenden Stößen verläuft und die Bleche nicht oder nicht ausreichend miteinander verschweißt werden.

Der Erfindung liegt die Aufgabe zugrunde, eine Schweißverbindung für automatisch geschweißte dünne Bleche zu finden, die in der Lage ist, Meß- oder Steuerungenauigkeiten der Schweißmaschine auszugleichen.

Die Lösung dieser Aufgabe ist in den kennzeichnenden Merkmalen des Patentanspruchs 1 beschrieben. Vorteilhafte Aus- und Weiterbildungen sind in den Patentansprüchen 2 bis 5 beschrieben.

Die mit der Erfindung erzielten Vorteile bestehen insbesondere darin, daß auch mit älteren oder ungenauen Schweißautomaten oder Schweißrobotern dünne Bleche automatisch miteinander verschweißt werden können oder daß auf vorhandenen Schweißautomaten dünnere Bleche als bisher miteinander verschweißbar sind.

Ein Ausführungsbeispiel der Erfindung wird in der Zeichnung dargestellt und wird im folgenden näher beschrieben. Es zeigen
- Fig.1: den Eckbereich dreier aneinanderstoßender Bleche und
- Fig.2: den Schweißnahtverlauf über den Stoß zweier nebeneinanderliegender Bleche.

Für die automatische Schweißbahnsteuerung von Schweißautomaten oder Schweißrobotern wird entweder ein Bewegungssteuerungsprogramm eingesetzt, das die theoretische oder tatsächliche Lage der Schweißbahn vorgibt oder die tatsächliche Lage der Stoßstellen der aneinanderliegenden Bleche wird mittels eines Sensors gemessen und die Steuerung wird danach eingestellt.

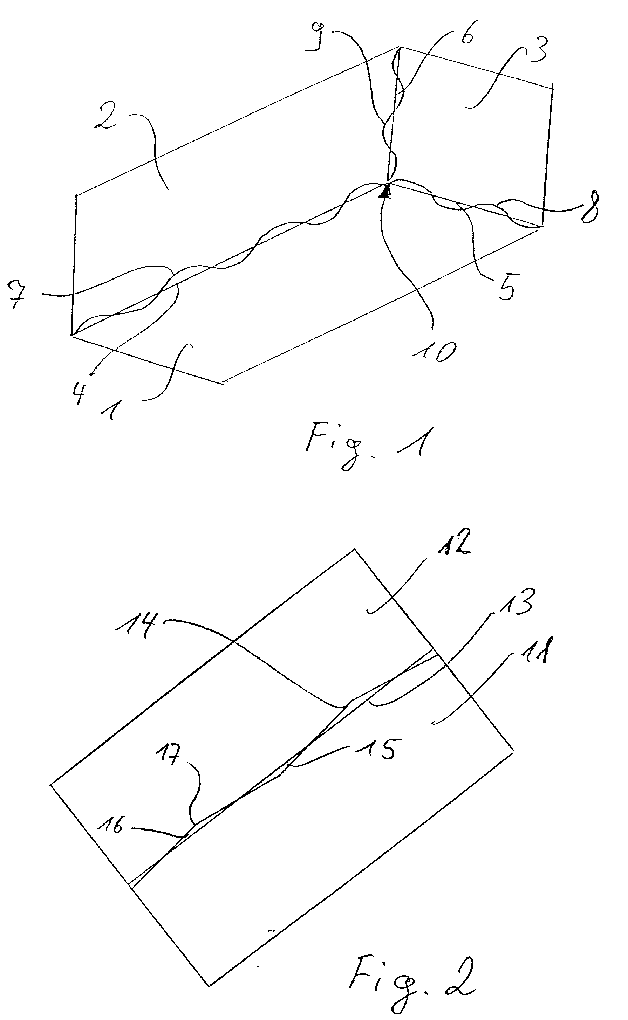

Fig. 1 zeigt den Eckbereich von drei aneinanderstoßenden Blechen 1,2,3. Diese Bleche können beispielsweise jeweils unter einem Winkel von 90° aufeinanderstoßen. Der nicht dargestellte Sensor mißt den Verlauf der Stoßlinien 4,5,6 zwischen den Blechen 1 und 2, 1 und 3 bzw. 2 und 3 und gibt diesen Verlauf dem Steuerrechner der Maschine weiter.

Sofern die erfindungsgemäßen Gegebenheiten vorliegen, daß die Ungenauigkeit der Brennerführung und/oder die Meßungenauigkeit des Sensors größer ist als die vorgesehene Schweißnahtbreite, wird vorgesehen, daß der Nahtverlauf nicht linear gesteuert wird. Die Steuerung überlagert der linearen Bewegungsrichtung eine Pendelbewegung für den Brenner, die so eingestellt ist, daß die Schweißnaht ein- oder beidseitig neben der Stoßlinie 4, 5, 6 der aneinanderstoßenden Bleche 1, 2, 3 liegt. Diese Pendelbewegung ist im aufgezeigten Beispiel nach Fig. 1 sogar eine räumliche Pendelbewegung, da der jeweilige Winkel der aneinanderstoßenden Bleche 1,2,3 beim Verlauf der Schweißbahnen berücksichtigt werden muß. Die Steuerlinien 7,8,9 für die Schweißnähte, die selbstverständlich eine dem Verfahren zuzuordnende Breite haben, sind somit räumlich um 90° gegeneinander abgewinkelt (im Ausführungsbeispiel die jeweils oberen und unteren Sinusverläufe). Insbesondere vorteilhaft ergibt diese Brennersteuerung eine sichere Überschweißung des Eckpunktes 10.

Als alternative Steuermöglichkeit für den Verlauf der Schweißnähte kann vorgesehen werden, daß sich der Brenner um eine Achse, die jeweils parallel zu den Stoßlinien 4,5,6 verläuft, schwenkt. Auch diese Steuerung ergibt einen Schweißnahtverlauf entsprechend den Steuerlinien 7,8,9, wobei jedoch berücksichtigt werden muß, daß sich der Abstand des Brenners zu den jeweiligen Blechen verändert, was jedoch für manche Schweißaufgaben und Verfahren nicht erheblich ist.

Fig. 2 zeigt zwei nebeneinanderliegende Bleche 11,12, die im Ausführungsbeispiel einen linear verlaufenden Stoß 13 bilden. Die Schweißnaht 14 verläuft bei diesem Ausführungsbeispiel zickzackförmig, wie der Zeichnung zu entnehmen ist. Sie liegt abschnittsweise beidseitig neben dem Stoß 13. An diesen Abschnitten 15, 16 erfolgt keine Verschweißung zwischen den Blechen 11 und 12. Die hier erzielte Schweißnahtüberdeckung wird auch erzielt, wenn der Stoß 13 seitlich bis zum maximalen Schweißnaht-Pendel-Umkehrpunkt 17 verschoben liegt. In diesem Fall liegt die Schweißnaht 14 abschnittsweise einseitig neben dem Stoß 13.

Die Pendelparameter, wie Amplitude, Form und Wellenlänge des Schweißnahtverlaufs, werden den Gegebenheiten der Konstruktion angepaßt, wie da sind: Wandstärke der Bleche, Material und Toleranz der Lage der Bleche zueinander und die aus der Beanspruchung sich ergebenden Schweißnahtquerschnitte und Schweißnahtabschnittslängen.

Ebenso wird das Schweißverfahren als solches den Gegebenheiten der Fertigungsstätte bzw. der Konstruktion angepaßt. Als Schweißverfahren eignen sich unter anderem Wig-, Plasma-, oder Laserschweißen. Insbesondere das Laserschweißen ist für die erfindungsgemäße Konstruktion sehr geeignet, da es aufgrund seiner hohen Leistungsdichte einen guten Tiefschweißeffekt hat.

Wie aus den Figuren erkennbar, wird eine sehr große Schweißnahtüberdeckung erzielt, auch wenn aufgrund der Ungenauigkeiten des Schweißautomaten und/oder des Sensors die tatsächliche Lage der zu verschweißenden Stoßlinien 4,5,6,13 neben den der Steuerung theoretisch eingegebenen und den Verlauf der Steuerlinien 7,8,9 bestimmenden theoretischen Verläufen liegen.

Die erfindungsgemäße Schweißverbindung eignet sich für alle schweißgeeigneten Werkstoffe, wie beispielsweise Eisen- und NE-Werkstoffe.

### Bezugszeichenliste

- 1.: Blech
- 2.: Blech
- 3.: Blech
- 4.: Stoßlinie
- 5.: Stoßlinie
- 6.: Stoßlinie
- 7.: Steuerlinie
- 8.: Steuerlinie
- 9.: Steuerlinie
- 10.: Eckpunkt
- 11.: Blech
- 12.: Blech
- 13.: Stoß
- 14.: Schweißnaht
- 15.: Abschnitt
- 16.: Abschnitt
- 17.: Schweißnaht-Pendel-Umkehrpunkt

## Patentansprüche

1. Schweißverbindung für automatisch geschweißte dünne Bleche (1,2,3,11,12), **dadurch gekennzeichnet**, daß die Schweißnaht (14) pendelnd um ihre theoretische oder mittels eines Sensors gemessene Lage an den Stoßlinien (4,5,6,13) der Bleche (1,2,3,11,12) verläuft, wobei sie abschnittsweise ein- oder beidseitig neben der Stoßlinie (4, 5, 6, 13) liegt.

2. Schweißverbindung nach Anspruch 1, **dadurch gekennzeichnet**, daß die pendelnde Schweißnaht (14) linear oder räumlich verläuft.

3. Schweißverbindung nach Anspruch 1 oder Anspruch 2, **dadurch gekennzeichnet**, daß der Pendelverlauf der Schweißnaht (14) zickzackförmig ist.

4. Schweißverbindung nach einem oder mehreren der Ansprüche 1 bis 3, **dadurch gekennzeichnet**, daß die Schweißnaht in der Kehle zweier unter einem Winkel zusammenstoßender Bleche (1,2; 2,3 bzw. 3,1) angeordnet ist.

5. Verfahren zum Herstellen einer Schweißverbindung nach einem oder mehreren der Ansprüche 1 bis 4, **dadurch gekennzeichnet**, daß die Schweißung durch Laserschweißen erfolgt.
